# EUROPEAN PATENT SPECIFICATION

(11) **EP 4 101 876 B1**
(45) Date of publication and mention of the grant of the patent: **04.03.2026**
(21) Application number: 21767243.5
(22) Date of filing: 10.03.2021
(51) Int. Cl.: C08G 75/08, C08G 18/10, C08G 18/16, C08G 18/38, G02B 1/04, G02C 7/00, C08G 18/32, C08G 18/72, C08G 75/06, C08G 18/00

(54) **POLYMERIZABLE COMPOSITION FOR OPTICAL MATERIAL, POLYMERIZABLE PREPOLYMER COMPOSITION FOR OPTICAL MATERIAL, CURED OBJECT, AND METHOD FOR PRODUCING OPTICAL MATERIAL**
POLYMERISIERBARE ZUSAMMENSETZUNG FÜR OPTISCHES MATERIAL, POLYMERISIERBARE PREPOLYMERZUSAMMENSETZUNG FÜR OPTISCHES MATERIAL, GEHÄRTETER GEGENSTAND UND VERFAHREN ZUR HERSTELLUNG VON OPTISCHEM MATERIAL
COMPOSITION POLYMÉRISABLE POUR MATÉRIAU OPTIQUE, COMPOSITION POLYMÉRISABLE DE PRÉPOLYMÈRE POUR MATÉRIAU OPTIQUE, OBJET DURCI ET PROCÉDÉ DE PRODUCTION DE MATÉRIAU OPTIQUE

(30) Priority: 10.03.2020 JP 2020041402; 24.11.2020 JP 2020194660
(43) Date of publication of application: 14.12.2022
(60) Divisional application: 26154006.6
(73) Proprietor: Mitsui Chemicals, Inc., Tokyo 104-0028 (JP)
(72) Inventor: SUESUGI, Kouji, Omuta-shi, Fukuoka 836-8610 (JP); ITO, Shinsuke, Omuta-shi, Fukuoka 836-8610 (JP); MATSUI, Yusuke, Omuta-shi, Fukuoka 836-8610 (JP)
(74) Representative: Hoffmann Eitle
(86) International application number: PCT/JP2021/009611
(87) International publication number: WO 2021/182526

(56) References cited:
- WO-A1-2012/066744
- WO-A1-2012/066744
- WO-A1-2017/047685
- JP-A- 2001 220 444
- JP-A- 2004 059 901
- JP-A- 2004 530 780
- JP-A- 2014 047 334
- JP-A- 2014 047 334
- JP-A- 2014 077 135
- JP-A- 2016 155 901

## Description

### Technical Field

The present disclosure relates to a polymerizable composition for optical material, a polymerizable prepolymer composition for optical material, a cured product, and a method for producing an optical material.

### Background Art

A method of producing a resin used in optical materials for plastic lenses is a casting polymerization method, in which a polymerizable composition including monomers is injected into a mold and cured by heating.

In the casting polymerization method, after a polymerizable composition is prepared and degassed, the polymerizable composition is injected into a mold, cured by heating (polymerization reaction), and then the product is removed from the mold (mold release) and annealed to obtain an optical material (for example, a lens and a semi-finished blank).

In heat curing, in order to improve the quality of optical materials, the polymerization reaction is generally carried out over several hours to several tens of hours while the temperature is gradually increased by heating, which specifically takes generally 20 to 48 hours. In addition, it is known that a large portion of the total time of the production process (for example, 90% of the total time) is spent for polymerization.

The example in Patent Literature 1 describes a mold injected with a polymerizable composition that was gradually heated from 10°C to 120°C and polymerized in 20 hours to obtain a molding.

The example in Patent Literature 2 also describes that a mold injected with a polymerizable composition was heated gradually from 25°C to 120°C over 16 hours, and then heated at 120°C for 4 hours to obtain a molding.

Patent Literature 1: WO 2014/027427 A
Patent Literature 2: WO 2014/133111 A

### SUMMARY OF INVENTION

### Technical Problem

As mentioned above, in prior art, in the process of producing optical materials, polymerization reactions are generally carried out over several hours to several tens of hours (for example, 20 to 48 hours) while the temperature is gradually increased by heating.

However, the long time required to produce optical materials necessitated long hours of operation of the equipment involved in the production, placing a heavy economic burden on the company and impairing work efficiency.

On the other hand, when optical materials are produced by the prior art method, if the polymerization reactions are carried out with a short heating polymerization time, the optical materials may not cure due to insufficient polymerization, or even if they do cure, defects such as striae may occur in the optical materials, and the quality of the optical materials may deteriorate.

Therefore, there is a need to maintain the quality of the resulting optical material and to shorten the production time of optical materials in the production of optical materials.

The problem to be solved by one embodiment of the present disclosure is to provide a method for producing an optical material that can maintain the quality of the resulting optical material and reduce the producing time of the optical material.

Another problem to be solved by one embodiment of the present disclosure is to provide a polymerizable composition for optical material used in the method for producing an optical material that can maintain the quality of the resulting optical material and reduce the production time of the optical material.

### Solution to Problem

The present invention is defined in the appended claims.

### Advantageous Effects of Invention

According to a first embodiment, the present invention provides a method for producing an optical material that maintains the quality of the resulting optical material and that can favorably reduce the production time of the optical material.

According to a second embodiment, the present invention provides a polymerizable composition for optical material used in a method for producing an optical material that can maintain the quality of the resulting optical material and can favorably reduce the production time of the optical material.

### BRIEF DESCRIPTION OF DRAWINGS

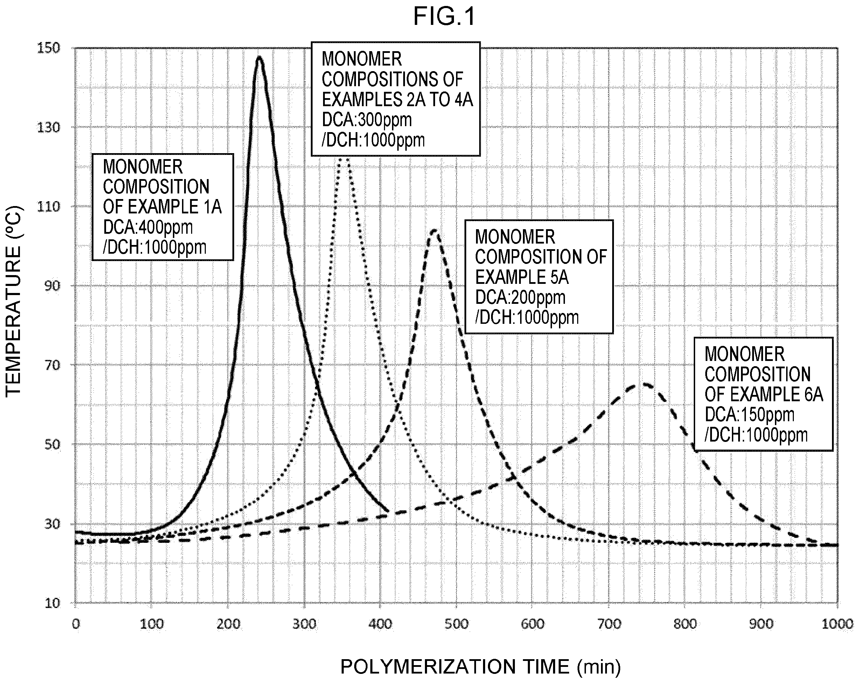

Fig. 1 is a graph showing the relationship between the polymerization time and temperature in the case of producing a molding using the polymerizable compositions for optical material of Examples 1A, 2A to 4A, 5A, and 6A, where the total mass of monomers for optical material in the polymerizable composition for optical material is 30 g.

### DESCRIPTION OF EMBODIMENTS

### <<Polymerizable composition for optical material>>

The polymerizable composition for optical material according to the first embodiment includes two or more different monomers and a polymerization catalyst, in which the content of the polymerization catalyst relative to the total amount of the monomers for optical material is from 0.1150 to 0.2000 parts by mass, the viscosity of the polymerizable composition for optical material is from 10 mPa·s to 1000 mPa·s as measured with a B-type viscometer at 20°C and 60 rpm, and at least one of the two or more different monomers for optical material is an episulfide compound.

By including the above configuration, the polymerizable composition for optical material of the first embodiment can maintain the quality of the resulting optical material and can also favorably reduce the production time of the optical material.

### (Monomers for Optical Material)

The polymerizable composition for optical material of the first embodiment includes two or more different monomers for optical material, and at least one of the two or more different monomers for optical material is an episulfide compound.

By polymerizing the monomers for optical material, strength and other properties can be imparted to the optical material.

The monomers for optical material may be any monomer used for optical applications, and there are no restriction.

For example, they may be monomers used to produce an optical material with any of the following properties.

The optical material obtained using the monomers for optical material may have a total light transmittance of 10% or higher. The total light transmittance of the above optical material may be measured in accordance with JIS K 7361-1 (1997).

The optical material obtained using the monomers for optical material may have a haze (that is, total haze) of 10% or less, preferably 1% or less, and more preferably 0.5% or less. The haze of the optical material is measured at 25°C using a haze measuring machine (TC-HIII DPK, Tokyo Denshoku Co., Ltd.) in accordance with JIS-K7105.

The optical material obtained using the monomers for optical material preferably has a refractive index of 1.58 or higher. The optical material obtained using the monomers for optical material may have a refractive index of 1.80 or less, or 1.75 or less. The refractive index of the optical material may be measured in accordance with JIS K7142 (2014).

There are no restrictions on the shape of the optical material obtained from the monomers for optical material, and the shape may be, for example, plate, cylinder, or rectangular.

### (Episulfide Compound)

Examples of the episulfide compound include epithioethylthio compounds, chained aliphatic 2,3-epithiopropylthio compounds, cyclic aliphatic 2,3-epithiopropylthio compounds, aromatic 2,3-epithiopropylthio compounds, chained aliphatic 2,3-epithiopropyloxy compounds, cyclic aliphatic 2,3-epithiopropyloxy compounds, and aromatic 2,3-epithiopropyloxy compounds, and these are used alone or in mixture of two or more kinds thereof. Examples of the episulfide compound include those listed in WO 2015/137401.

In the first embodiment, from the viewpoint of maintaining the quality of the optical material and reducing the production time of the optical material, the episulfide compound is preferably at least one selected from the group consisting of bis(2,3-epithiopropyl)sulfide, bis(2,3-epithiopropyl)disulfide, bis(1,2-epithioethyl)sulfide, bis(1,2-epithioethyl)disulfide, and bis(2,3-epithiopropylthio)methane, and is more preferably bis(2,3-epithiopropyl)disulfide.

The monomers for optical material preferably include at least one of a polythiol compound and an isocyanate compound, and more preferably include a polythiol compound.

Examples of the monomers for optical material include polymerizable monomers that are polymerized when the polymerization catalyst described later is used.

The two or more different monomers for optical material preferably include at least one selected from the group consisting of polythiol compounds, polyol compounds, isocyanate compounds, and amine compounds.

### (Polythiol Compound)

Polythiol compounds are compounds having two or more mercapto groups, such as those exemplified in WO 2016/125736.

In the present disclosure, from the viewpoint of maintaining the quality of the optical material and reducing the production time of the optical material, the polythiol compound preferably include at least one selected from 4-mercaptomethyl-1,8-dimercapto-3,6-dithiaoctane, 5,7-dimercaptomethyl-1,11-dimercapto-3,6,9-trithiaoundecane, 4,7-dimercaptomethyl-1,11-dimercapto-3,6,9-trithiaoundecane, 4,8-dimercaptomethyl-1,11-dimercapto-3,6,9-trithiaundecane, pentaerythritol tetrakis(3-mercaptopropionate), bis(mercaptoethyl)sulfide, pentaerythritol tetrakis(2-mercaptoacetate), 2,5-bis(mercaptomethyl)-1,4-dithiane, 1,1,3,3-tetrakis(mercaptomethylthio)propane, 4,6-bis(mercaptomethylthio)-1,3-dithiane, and 2-(2,2-bis(mercaptomethylthio)ethyl)-1,3-dithiethane,more preferably include at least one selected from 4-mercaptomethyl-1,8-dimercapto-3,6-dithiaoctane, 5,7-dimercaptomethyl-1,11-dimercapto-3,6,9-trithiaoundecane, 4,7-dimercaptomethyl-1,11-dimercapto-3,6,9-trithiaoundecane, 4,8-dimercaptomethyl-1,11-dimercapto-3,6,9-trithiaoundecane, pentaerythritol tetrakis(3-mercaptopropionate), and pentaerythritol tetrakis(2-mercaptoacetate), and even more preferably include at least one selected from 4-mercaptomethyl-1,8-dimercapto-3,6-dithiaoctane, 5,7-dimercaptomethyl-1,11-dimercapto-3,6,9-trithiaoundecane, 4,7-dimercaptomethyl-1,11-dimercapto-3,6,9-trithiaoundecane, 4,8-dimercaptomethyl-1,11-dimercapto-3,6,9-trithiaoundecane, and pentaerythritol tetrakis(3-mercaptopropionate).

### (Polyol Compound)

The polyol compound is a compound containing two or more hydroxyl groups, and examples thereof include one or more aliphatic or alicyclic alcohols. Specific examples include linear or branched-chain aliphatic alcohols, alicyclic alcohols, and alcohols to which at least one selected from the group consisting of ethylene oxide, propylene oxide, and ε-caprolactone is added. More specific examples include the compounds listed in WO 2016/125736.

The polyol compound is preferably at least one selected from ethylene glycol, diethylene glycol, triethylene glycol, propylene glycol, 1,3-propanediol, 1,2-cyclopentanediol, 1,3-cyclopentanediol, 1,2-cyclohexanediol, 1,3-cyclohexanediol, and 1,4-cyclohexanediol.

### (Isocyanate Compound)

Examples of the isocyanate compound include aliphatic isocyanate compounds, alicyclic isocyanate compounds, aromatic isocyanate compounds, and heterocyclic isocyanate compounds, and these are used alone or in mixture of two or more kinds thereof. These isocyanate compounds may include dimers, trimers, and prepolymers. Examples of these isocyanate compounds include those listed in WO 2011/055540.

In the present disclosure, alicyclic isocyanate compounds refer to isocyanate compounds that contain an alicyclic structure and may also contain a heterocyclic structure. Aromatic isocyanate compounds refer to isocyanate compounds that contain an aromatic structure and may also contain alicyclic and heterocyclic structures. Heterocyclic isocyanate compounds are isocyanate compounds that contain a heterocyclic structure and do not contain an alicyclic or aromatic structure.

The isocyanate compound preferably includes at least one selected from aliphatic isocyanate compounds, alicyclic isocyanate compounds, aromatic isocyanate compounds, and heterocyclic isocyanate compounds.

In the present disclosure, from the viewpoint of maintaining the quality of the optical material and reducing the production time of the optical material, the isocyanate compound preferably include at least one selected from 2,5-bis(isocyanatomethyl)bicyclo-[2.2.1]-heptane, 2,6-bis(isocyanatomethyl)bicyclo-[2.2.1]-heptane, m-xylylene diisocyanate, 2,4-tolylene diisocyanate, 2,6-tolylene diisocyanate, dicyclohexylmethane diisocyanate, 1,3-bis(isocyanatomethyl)cyclohexane, 1,4-bis(isocyanatomethyl)cyclohexane, isophorone diisocyanate, 1,6-hexamethylene diisocyanate, and 1,5-pentamethylene diisocyanate, more preferably include at least one selected from 2,5-bis(isocyanatomethyl)bicyclo-[2.2.1]-heptane, 2,6-bis(isocyanatomethyl)bicyclo-[2.2.1]-heptane, m-xylylene diisocyanate, and 1,3-bis(isocyanatomethyl)cyclohexane, and even more preferably include at least one selected from 2,5-bis(isocyanatomethyl)bicyclo-[2.2.1]-heptane, 2,6-bis(isocyanatomethyl)bicyclo-[2.2.1]-heptane, and m-xylylene diisocyanate.

### (Amine Compound)

Examples of the amine compound include primary polyamine compounds such as ethylenediamine, 1,2- or 1,3-diaminopropane, 1,2-, 1,3-, or 1,4-diaminobutane, 1,5-diaminopentane, 1,6-diaminohexane, 1,7-diaminoheptane, 1,8-diaminooctane, 1,10-diaminodecane, 1,2-, 1,3-, or 1,4-diaminocyclohexane, o-, m-, or p-diaminobenzene, 3,4- or 4,4'-diaminobenzophenone, 3,4- or 4,4'-diaminodiphenyl ether, 4,4'-diaminodiphenyl methane, 4,4'-diaminodiphenyl sulfide, 3,3'- or 4,4'-diaminodiphenylsulfone, 2,7-diaminofluorene, 1,5-, 1,8-, or 2,3-diaminonaphthalene, 2,3-, 2,6-, or 3,4-diaminopyridine, 2,4- or 2,6-diaminotoluene, m- or p-xylylenediamine, isophoronediamine, diaminomethylbicycloheptane, 1,3- or 1,4-diaminomethylcyclohexane, 2- or 4-aminopiperidine, 2- or 4-aminomethylpiperidine, 2- or 4-aminoethylpiperidine, N-aminoethylmorpholine, and N-aminopropylmorpholine;
monofunctional secondary amine compounds such as diethylamine, dipropylamine, din-butylamine, di-sec-butylamine, di-isobutylamine, di-n-pentylamine, di-3-pentylamine, dihexylamine, dioctylamine, di(2-ethylhexyl)amine, methylhexylamine, diarylamine, N-methylallylamine, piperidine, pyrrolidine, diphenylamine, N-methylamine, N-ethylamine, dibenzylamine, N-methylbenzylamine, N-ethylbenzylamine, dicyclohexylamine, N-methylaniline, N-ethylaniline, dinaphthylamine, 1- methylpiperazine, and morpholine; and
secondary polyamine compounds such as N,N'-dimethylethylenediamine, N,N'-dimethyl-1,2-diaminopropane, N,N'-dimethyl-1,3-diaminopropane, N,N'-dimethyl-1,2-diaminobutane, N,N'-dimethyl-1,3-diaminobutane, N,N'-dimethyl-1,4-diaminobutane, N,N'-dimethyl-1,5-diaminopentane, N,N'-dimethyl-1,6-diaminohexane, N,N'-dimethyl-1,7-diaminoheptane, N,N'-diethylethylenediamine, N,N'-diethyl-1,2-diaminopropane, N,N'-diethyl-1,3- diaminopropane, N,N'-diethyl-1,2-diaminobutane, N,N'-diethyl-1,3-diaminobutane, N,N'-diethyl-1,4-diaminobutane, N,N'-diethyl-1,5-diaminopentane, N,N'-diethyl-1,6-diaminohexane, N,N'-diethyl-1,7-diaminopropane, piperazine, 2-methylpiperazine, 2,5-dimethylpiperazine, 2,6-dimethylpiperazine, homopiperazine, 1,1-di-(4-piperidyl)methane, 1,2-di-(4-piperidyl)ethane, 1,3-di-(4-piperidyl)propane, 1,4-di-(4-piperidyl)butane, and tetramethylguanidine.

### <Polymerization Catalyst>

The polymerizable composition for optical material of the first embodiment include at least one polymerization catalyst.

There are no restrictions on the polymerization catalyst, and examples thereof include basic catalysts, organometallic catalysts, zinc carbamates, ammonium salts, and sulfonic acids.

The polymerization catalyst may be used alone or in appropriate combination of two or more kinds thereof.

### (Basic Catalyst)

Examples of the basic catalyst include amine-based catalysts (including imidazole-based catalysts).

Specific examples include ally, tertiary amine-based catalysts such as triethylenediamine, N,N-dimethylcyclohexylamine, N,N-dicyclohexylmethylamine, N,N-dimethylethanolamine, triethylamine, and N-ethylmorpholine; 2-methylpyrazine, pyridine, α-picoline, β-picoline, γ-picoline, 2,6-rutidine, 3,5-rutidine, 2,4,6-collidine, 3-chloropyridine, N,N-diethylaniline, N,N-dimethylaniline, hexamethylenetetramine, quinoline, isoquinoline, N,N-dimethyl-p-toluidine, N,N-dimethylpiperazine, quinaldine, 4-methylmorpholine, triallylamine, trioctylamine, 1,2-dimethylimidazole, and 1-benzyl-2-methylimidazole.

Among the above, amine-based catalysts are preferable as basic catalysts.

Examples of the amine-based catalyst include tertiary amine-based catalysts such as 3,5-lutidine, 2,4,6-collidine, N,N-dimethylcyclohexylamine, N,N-dicyclohexylmethylamine, triethylenediamine, N,N-dimethylethanolamine, triethylamine, and N-ethylmorpholine.

Among the above, N,N-dimethylcyclohexylamine and N,N-dicyclohexylmethylamine are preferable as basic catalysts.

The basic catalyst preferably also include the compound represented by the following general Formula (2) and/or the compound represented by the following general Formula (3).

In the general Formula (2), R₁ represents a linear alkyl group having 1 to 20 carbon atoms, a branched alkyl group having 3 to 20 carbon atoms, a cycloalkyl group having 3 to 20 carbon atoms, or a halogen atom, in which the plurality of R₁ may be identical or different. Q represents a carbon or nitrogen atom. m indicates an integer from 0 to 5.

In the general Formula (3), each of R₂, R₃, and R₄ independently represents a linear alkyl group having 1 to 20 carbon atoms, a branched alkyl group having 3 to 20 carbon atoms, a cycloalkyl group having 3 to 20 carbon atoms, an allyl group, or a hydrocarbon group containing a hydroxyl group.

The pKa value of the basic catalyst is preferably 5 or more, more preferably 7 or more, and even more preferably 9 or more.

The pKa value of the basic catalyst is preferably 12 or less, and more preferably 11 or less.

The pKa value (acid dissociation index) may be measured, for example, by (a) the method described in The Journal of Physical Chemistry vol. 68, number 6, page 1560 (1964), or (b) the method using a potentiometric auto titrator (for example, AT-610 (trade name)) manufactured by Kyoto Electronics Manufacturing Co. Ltd., and may be obtained, for example, from (c) the acid dissociation index listed in the Chemical Handbook edited by the Chemical Society of Japan (revised 3rd edition, June 25, 1984, published by Maruzen Corporation).

### (Organometallic Catalyst)

Examples of the organometallic catalyst include organotin-based catalysts; organic acid salts of iron, nickel, and zinc; acetylacetonate complexes; catalyst compositions including carboxylic acid metal compounds and quaternary ammonium salt compounds; catalyst compositions including bicyclic tertiary amine compounds; metal catalysts including alkoxy groups, carboxy groups, or the like coordinated to titanium or aluminum.

Among the above organometallic catalysts, organotin-based catalysts are preferable.

Examples of the organotin-based catalyst include dibutyltin dichloride (DBC), dimethyltin dichloride (DMC), dibutyltin dilaurate (DBTDL), and dibutyltin diacetate.

The organotin-based catalyst preferably includes at least one selected from dibutyltin dichloride, dimethyltin dichloride, dibutyltin dilaurate, and dibutyltin diacetate.

The polymerization catalyst preferably include at least one selected from the group consisting of basic catalysts having a pKa value of from 5 to 12 and organometallic catalysts.

The polymerization catalyst preferably also include at least one selected from the group consisting of amine-based catalysts and organotin-based catalysts.

The polymerization catalyst preferably includes at least one selected from the group consisting of N,N-dimethylcyclohexylamine, N,N-dicyclohexylmethylamine, 3,5-lutidine, 2,4,6-collidine, triethylenediamine, N,N-dimethylethanolamine, N-ethylmorpholine, dibutyltin dichloride, dimethyltin dichloride, dibutyltin dilaurate, and dibutyltin diacetate.

Among the above, the polymerization catalyst preferably include at least one selected from the group consisting of N,N-dimethylcyclohexylamine and N,N-dicyclohexylmethylamine.

The polymerizable composition for optical material of the first embodiment has a polymerization catalyst content of from 0.1150 to 0.2000 parts by mass relative to the total amount of the monomers for optical material.

The content of the polymerization catalyst in the first embodiment is larger than that in prior art optical material production methods.

This allows the polymerizable composition for optical material to generate reaction heat (that is, heat due to self-heating) in a short time when polymerizing the monomers for optical material in the polymerizable composition for optical material in the curing step. Therefore, the polymerization reaction can be accelerated favorably, and as described below, a high-quality optical material can be obtained in a shorter time than before while increasing the viscosity of the polymerizable composition and suppressing thermal convection, which is presumed to be the cause of striae.

When the content of the polymerization catalyst relative to the total amount of the monomers for optical material is 0.1150 parts by mass or more, the polymerization reaction is favorably promoted and a high-quality optical material can be obtained in a short time. In addition, by accelerating the polymerization reaction favorably, the mold release property of the cured product when removed from the mold can be improved.

From the above viewpoint, the content of the polymerization catalyst relative to the total amount of the monomers for optical material is preferably 0.1175 parts by mass or more, and more preferably 0.1250 parts by mass or more.

When the content of polymerization catalyst relative to the total amount of the monomers for optical material is 0.2000 parts by mass or less, for example, the handling property of the polymerizable composition for optical material when injected into a mold is improved.

From the above viewpoint, the content of the polymerization catalyst relative to the total amount of the monomers for optical material is preferably 0.1800 parts by mass or less, and more preferably 0.1500 parts by mass or less.

The content of the polymerization catalyst may be set as appropriate according to the type of polymerization catalyst, the type and amount of the monomers used (for example, episulfide compounds or other components), and the desired shape of the molding.

The range of polymerization catalyst content described above may be changed as appropriate according to the type of the monomers for optical material and polymerization catalyst.

The polymerization catalyst preferably satisfies the following condition 1.
[Condition 1]
-Ea/R is from -7100 to -1500
(wherein Ea is the activation energy calculated by an Arrhenius plot from the reaction rate constants of the two or more different monomers for optical material at two or more different temperatures, and R is the gas constant (8.314 J/mol/ K)).

When the polymerization catalyst satisfies the condition 1, the variation in the polymerization rate can be suppressed in the process of polymerization curing of the polymerizable composition, and as a result, optical distortion and the generation of striae can be suppressed to obtain an optical material with excellent appearance.

The value of Ea is calculated by the following method.

The value of Ea is calculated by performing:
a physical property acquiring step of heating a composition 1 including a polymerization reactive compound and a predetermined amount of a polymerization catalyst, and obtaining a physical property value 1a derived from the functional groups of the polymerization reactive compound before heating and a physical property value 1b derived from the remaining functional groups after keeping the compound warm for a predetermined period of time, when the compound is kept warm at a plurality of temperatures;
a residual functional group ratio calculation step of calculating the residual functional group ratio 1 at the plurality of temperatures from the physical property values 1a and 1b;
reaction rate constant calculation step of calculating a reaction rate constant 1 at the plurality of temperatures based on the reaction rate equation from the residual functional group ratio 1; and
a fitting step of calculating an activation energy Ea1 and a frequency factor A1 by Arrhenius plot from the reaction rate constant 1 at the plurality of temperatures.

The calculated Ea is used to determine whether or not the polymerization catalyst satisfies the condition 1.

The specific aspect of calculating the value of Ea and the method of determining whether the polymerization catalyst satisfies the condition 1 is the same as the specific aspect described in WO 2020/256057.

### (Other Additives)

The polymerizable composition for optical material of the first embodiment may include optional additives.

Examples of the optional additives include photochromic compounds, internal mold release agents, bluing agents, and UV absorbers.

### (Photochromic Compound)

Photochromic compounds are compounds that undergo a reversible change in molecular structure upon irradiation of light at a specific wavelength, with a corresponding change in absorption properties (absorption spectrum).

Examples of the photochromic compound used in the first embodiment include compounds that change their absorption characteristics (absorption spectrum) for light of a specific wavelength.

In the first embodiment, there are no restrictions on the photochromic compound, and any conventionally known compound that can be used for photochromic lenses may be selected and used as appropriate. For example, one or more of spiropyran compounds, spiroxazine compounds, fulgide compounds, naphthopyran compounds, and bisimidazole compounds may be used according to the desired coloration.

### (Internal mold release agent)

Examples of the internal mold release agent include acidic phosphate esters. Examples of the acidic phosphate ester include phosphoric acid monoesters and phosphoric acid diesters, each of which may be used alone or in mixture of two or more kinds thereof.

### (Bluing Agent)

Examples of the bluing agent include those having an absorption band in the orange to yellow wavelength range in the visible light region and the function of adjusting the hue of the optical material made of resin. The bluing agent more specifically includes a substance that exhibits a blue to purple color.

### (Ultraviolet Absorber)

Examples of the ultraviolet absorber used include benzophenone UV absorbers such as 2,2'-dihydroxy-4-methoxybenzophenone, triazine UV absorbers such as 2-[4-[(2-hydroxy-3-dodecyloxypropyl)oxy]-2-hydroxyphenyl]4,6-bis(2,4-dimethylphenyl)-1,3,5-triazine, benzotriazole UV absorbers such as 2-(2H-benzotriazol-2-yl)-4-methylphenol, 2-(2H-benzotriazol-2-yl)-4-tert-octylphenol, and 2-(5-tert-butyl-2-hydroxyphenyl)benzotriazole. Among them, preferable examples include benzotriazole UV absorbers such as 2-(5-chloro-2H-benzotriazol-2-yl)-4-methyl-6-tert-butylphenol and 2-(5-tert-butyl-2-hydroxyphenyl)benzotriazole. These UV absorbers may be used alone or in combination of two or more kinds thereof.

### (Viscosity)

From the viewpoint of suppressing striae, the polymerizable composition for optical material of the first embodiment has a viscosity of 10 mPa·s or more, preferably 20 mPa·s or more, more preferably 40 mPa·s or more, even more preferably 80 mPa·s or more, particularly preferably 100 mPa·s or more, and yet even more preferably 120 mPa·s or more as measured with a B-type viscometer at 20°C and 60 rpm.

From the viewpoint of maintaining favorable handling property during forming the optical material into a desired shape, the polymerizable composition for optical material of the first embodiment has a viscosity of 1000 mPa·s or less, preferably 700 mPa·s or less, and more preferably 400 mPa·s or less as measured with a B-type viscometer at 20°C and 60 rpm.

The viscosity of the polymerizable composition for optical material of the first embodiment may be adjusted depending on the use of the resulting cured product.

For example, when a cured product is obtained using a mold for convex lenses, the injection port is narrow (for example, from 1 mm to 3 mm), so the polymerizable composition for optical material of the first embodiment preferably has a viscosity of from 10 mPa·s to 100 mPa·s from the viewpoint of suppressing striae.

On the other hand, when the cured product is obtained using a mold for ordinary lenses other than convex lenses, the injection port is wide (for example, from 5 mm to 15 mm), so the polymerizable composition for optical material of the first embodiment preferably has a viscosity of from 10 mPa·s to 1000 mPa·s, more preferably from 30 mPa·s to 1000 mPa·s, in terms of controlling striae.

By increasing the viscosity of the polymerizable composition for optical material, thermal convection due to the temperature difference between the inside and outside of the composition can be suppressed when heat is applied to the above composition from outside, thereby reducing striae derived from thermal convection.

However, if the amount of catalyst is small, the rate of thickening during polymerization is not sufficient, so the viscosity does not increase to the extent that thermal convection can be suppressed, and the temperature cannot be increased rapidly in a short time. In addition, the time required to complete the polymerization is also extended.

On the other hand, according to the present disclosure, the catalyst amount is increased to the optimum range in consideration of the reactivity of the episulfide compound, so the viscosity of the entire composition can be increased faster. This allows the suppression of thermal convection caused by rapid temperature rise while suppressing uneven polymerization, thus allowing polymerization to proceed in a short time.

### (Thixotropic Ratio)

The polymerizable composition for optical material of the first embodiment preferably has a thixotropic ratio of 1.3 or less, more preferably 1.2 or less, and even more preferably 1.1 or less.

The polymerizable composition for optical material of the first embodiment has a thixotropic ratio of 1.3 or less, which allows the composition to be filled into a polymerization container such as a mold as described below promptly, and also suppresses thermal convection during polymerization to further prevent generation of striae and other phenomena in the monomers for optical material. As a result, the generation of striae in the resulting optical material can be suppressed and the quality of the material can be maintained.

The polymerizable composition for optical material of the first embodiment preferably has a thixotropic ratio of 0.9 or more, more preferably 0.95 or more, and even more preferably 1.0 or more.

The thixotropic ratio is calculated by dividing the viscosity η₁ measured with a B-type viscometer at 20°C and 6 rpm rotation by the viscosity η₂ measured at 60 rpm.

The thixotropic ratio can be reduced, for example, by reducing the molecular weight of the two or more monomers for optical material, by suppressing the degree of polymerization of the prepolymer below a certain level, or by reducing the ratio of the structure that gives elasticity in the monomers.

The polymerizable composition for optical material of the first embodiment includes two or more different monomers for optical material, a polymerization catalyst, and a prepolymer that is a polymer of the two or more different monomers for optical material and has a polymerizable functional group, in which at least one of the two or more different monomers for optical material is preferably an episulfide compound.

A prepolymer is a polymer of two or more different monomers for optical material and has polymerizable functional groups.

Cured products obtained by polymerizing a prepolymer and two or more different monomers for optical material can be used as optical materials.

Examples of the prepolymer include polymers in which the polymerizable functional groups of two of the monomers for optical material of the monomers for optical material are not polymerized at an equivalent ratio of 1:1, or polymers in which two of the monomers for optical material of the monomers for optical material are polymerized at an unbalanced equivalent ratio.

### <<Polymerizable prepolymer composition for optical material>>

The polymerizable prepolymer composition for optical material of the first embodiment is a composition including a prepolymer which is a polymer of two or more different monomers for optical material and has a polymerizable functional group, and a polymerization catalyst, in which at least one of the two or more different monomers for optical material is an episulfide compound, and the viscosity of the polymerizable prepolymer composition for optical material is from 10 mPa·s to 1000 mPa·s as measured with a B-type viscometer at 20°C and 60 rpm.

The viscosity of the prepolymer composition preferably not change easily (or stable) over time.

The "viscosity of the prepolymer composition is stable" means that the change in viscosity is 10% or less before and after storage of the prepolymer composition at 20°C for 24 hours.

Specific examples, preferable specific examples, and preferable embodiments, and others for the monomers for optical material and the polymerization catalyst of the polymerizable prepolymer composition for optical material are the same as those for the monomers for optical material and the polymerization catalyst described above in the section of the polymerizable composition for optical material.

The definition of the prepolymer of the polymerizable prepolymer composition for optical material is the same as the definition of the prepolymer described above in the section of the polymerizable composition for optical material.

In the polymerizable prepolymer composition for optical material of the first embodiment, the content of the polymerization catalyst relative to the total 100 parts by mass of the prepolymer is preferably from 0.01 to 0.2 parts by mass.

When the content of the polymerization catalyst relative to the total 100 parts by mass of the prepolymer is 0.01 parts by mass or more, the polymerization reaction is favorably accelerated and a high-quality optical material can be obtained in a short time. In addition, by accelerating the polymerization reaction favorably, the mold release property of the cured product when removed from the mold can be improved.

From the above viewpoint, the content of the polymerization catalyst relative to the total 100 parts by mass of the prepolymer is preferably 0.02 parts by mass or more, and more preferably 0.03 parts by mass or more.

When the content of the polymerization catalyst relative to the total 100 parts by mass of the prepolymer is 0.2 parts by mass or less, for example, the handling property of the polymerizable composition for optical material when injected into a mold is improved.

From the above viewpoint, the content of the polymerization catalyst relative to the total 100 parts by mass of the prepolymer is preferably 0.18 parts by mass or more, more preferably 0.16 parts by mass or more, and even more preferably 0.14 parts by mass or more.

### (Thixotropic Ratio)

The polymerizable prepolymer composition for optical material of the first embodiment preferably has a thixotropic ratio of 1.3 or less, more preferably 1.2 or less, and even more preferably 1.1 or less.

The polymerizable prepolymer composition for optical material of the first embodiment has a thixotropic ratio of 1.3 or less, which allows the composition to be filled into a polymerization container such as a mold as described below promptly, and also suppresses thermal convection during polymerization to further prevent generation of striae and other phenomena in the monomers for optical material. As a result, the generation of striae in the resulting optical material can be suppressed and the quality of the material can be maintained.

The polymerizable composition for optical material of the first embodiment preferably has a thixotropic ratio of 0.9 or more, more preferably 0.95 or more, and even more preferably 1.0 or more.

The thixotropic ratio is measured as described above.

In the polymerizable prepolymer composition for optical material of the first embodiment, Refractive index A of the polymerizable prepolymer composition for optical material minus Refractive index B of the prepolymer raw material composition, which is a composition before forming a prepolymer and containing the two or more different monomers for optical material and the polymerization catalyst (also referred to as "Refractive index A - Refractive index B"), is preferably more than 0, more preferably 0.001 or more, and even more preferably 0.005 or more.

Refractive index A is the refractive index of the polymerizable prepolymer composition for optical material after polymerization of the monomers for optical material and the polymerization catalyst to obtain prepolymers, and Refractive index B is the refractive index of the prepolymer raw material composition before polymerization of the monomers for optical material and the polymerization catalyst to obtain prepolymers.

When Refractive index A - Refractive index B is within the above range, it is easier to adjust the polymerizable composition for optical material to a predetermined viscosity. It is also easier to stabilize the quality (for example, refractive index and appearance) of the cured product of the polymerizable composition for optical material.

Refractive index A- Refractive index B may be 0.020 or less, and may be 0.010 or less.

### <<Cured Product>>

The cured product of the first embodiment is a cured product of the polymerizable composition for optical material of the first embodiment or the polymerizable prepolymer composition for optical material of the first embodiment.

In the cured product of the first embodiment, from the viewpoint of reducing striae, when an amine-based catalyst is used as a polymerization catalyst, the amine content is preferably 0.01% by mass or more, more preferably 0.02% by mass or more, even more preferably 0.04 % by mass or more, and particularly preferably 0.06 % by mass or more.

In addition, in the cured product of the first embodiment, from the viewpoint of improving the handling property of the polymerizable composition for optical material, the amine content is preferably 0.20% by mass or less, more preferably 0.18% by mass or less, and even more preferably 0.15% by mass or less.

The amine content is measured by gas chromatography-mass spectrometry from a dichloromethane composition obtained by dispersing the cured product in dichloromethane and extracting by ultrasonic waves.

The amine content in the cured product is measured as follows.

200 mg of the cured product powdered with a metal file and 3 mL of dichloromethane are placed in a centrifuge tube (volume: 10 mL), sonicated at room temperature for 10 minutes using an ultrasonic cleaner (US-4, manufactured by Iuchi Co., Ltd.), and centrifuged at 4000 rpm for 10 minutes using a centrifuge (Compact Tabletop Centrifuge Model 2410, manufactured by Kubota Corporation, Co., Ltd.).

The supernatant is collected, and the residue is again dispersed in 3 mL of dichloromethane and subjected to the ultrasonic extraction and centrifugation described above (hereinafter also referred to as "residue extraction").

The above residue extraction is repeated twice more, and dichloromethane is added to the obtained supernatant solution to bring the total volume to 10 mL.

The obtained 10 mL supernatant solution is filtered and subjected to gas chromatography-mass spectrometry (also referred to as GC-MS) (gas chromatograph-mass spectrometer: 6890GC/5973N MSD manufactured by Agilent, column: CP-Sil 8 CB for Amine (0.25 mm ID x 30 m, F.T = 0.25 µm)) to obtain peak area values derived from amines. The obtained amine-derived peak area values and calibration curves for amine content are prepared to determine the amine content in the cured product.

The above amine means an amine compound that can be used as a polymerization catalyst or an amine compound derived from the above amine compound.

Especially in optical applications where light transparency is required, the degree of devitrification of the cured product of the first embodiment is preferably less than 50, and more preferably less than 35.

The degree of devitrification is measured by the following method.

Light from a light source (for example, Luminar Ace LA-150A manufactured by Hayashi-Repic Co., Ltd.) is transmitted through the cured product in the dark. The image of light transmitted through the cured product is captured by an image processor (for example, an image processor manufactured by Ube Information Systems, Inc.), shading processing is performed on the captured image, the degree of shading of the image after processing was quantified for each pixel, and the value calculated as the average value of the numerical values of the degree of shading for each pixel was used as the degree of devitrification.

In the cured product of the first embodiment, it is preferable that there be no striae with a length of 1.0 mm or more within a radius of 15 mm from the center of the cured product, and it is more preferable that there be no striae with a length of 1.0 mm or more within and outside a radius of 15 mm from the center of the cured product.

The cured product of the first embodiment is more specifically a cured product of two or more different optical monomers, and may be a cured product in which at least one of the two or more different monomers for optical material is an episulfide compound, there are no striae of 1.0 mm or more within a radius of 15 mm from the center of the cured product, and the amine content as measured by gas chromatography-mass spectrometry is from 0.01% by mass to 0.20% by mass.

### <<Method for Producing Optical Material>>

The method for producing an optical material of the first embodiment includes the following production methods A and B.

### <Production Method A>

The production method A includes: a preparation step of preparing a polymerizable composition for optical material including two or more different monomers for optical material and a polymerization catalyst, in which at least one of the two or more different monomers for optical material is an episulfide compound, and the content of the polymerization catalyst relative to the total amount of the two or more different monomers for optical material is from 0.1150 to 0.2000 parts by mass; a casting step of adjusting the viscosity of the polymerizable composition for optical material to 10 mPa·s to 1000 mPa·s as measured with a B-type viscometer at 20°C and 60 rpm, and casting it into a mold; and a curing step of polymerizing the two or more different monomers for optical material in the polymerizable composition for optical material in the mold to cure the polymerizable composition for optical material.

The production method A includes the preparation step, casting step, and curing step to maintain the quality of the resulting optical material and to reduce the production time of the optical material.

The production method A may include the preparation step, casting step, and curing step in this order.

In the polymerizable composition for optical material prepared in the preparation step in the production method A, the content of the polymerization catalyst relative to the total amount of the two or more different monomers for optical material is from 0.1150 to 0.2000 parts by mass. The content of the polymerization catalyst is greater than in prior art methods for producing an optical material.

This allows the polymerizable composition for optical material to generate reaction heat (that is, heat due to self-heating) in a short time when polymerizing the monomers for optical material in the polymerizable composition for optical material in the curing step.

Since the polymerization reaction of the monomers for optical material in the polymerizable composition for optical material can be accelerated by using the above reaction heat, a high-quality optical material can be obtained in a shorter time with prior art techniques.

In prior art techniques, polymerization reactions were proceeded mainly by heating a polymerizable composition for optical material, but in the production method A, heating of the polymerizable composition for optical material is not necessarily required.

In addition, since the production method A also uses self-heating of the composition, polymerization can be proceeded without excessive dependence on external heat supply. Therefore, in addition to increasing the viscosity of the composition, which will be discussed later, non-uniformity of heat and thermal convection in the polymerizable composition for optical material can be suppressed, whereby the generation of striae is suppressed.

The term "striae" in the present disclosure means a state in which the refractive index of a specific portion differs from the normal refractive index of the surrounding area. It can also be described as a state of disadvantage in the desired use of the optical material. In optical materials, striae are a type of defect.

### <Preparation Step>

The production method A includes a preparation step of preparing a polymerizable composition for optical material including two or more different monomers for optical material and a polymerization catalyst, in which at least one of the two or more different monomers for optical material is an episulfide compound, and the content of the polymerization catalyst relative to the total amount of the two or more different monomers for optical material is from 0.1150 to 0.2000 parts by mass.

The preparation step may be a step of simply preparing a polymerizable composition for optical material produced in advance, or may be a step of producing a polymerizable composition for optical material.

In the preparation step, there are no restrictions on the polymerizable composition for optical material as long as it includes two or more different monomers for optical material and a polymerization catalyst.

The polymerizable composition for optical material may be ready-made, or may be prepared by mixing at least two or more different monomers for optical material and a polymerization catalyst.

There are no restrictions on the mixing method, and known methods may be used.

There are no restrictions on the temperature at which the above components are mixed, but the temperature is preferably 30°C or lower, and more preferably room temperature (25°C) or lower.

From the viewpoint of the pot life of the polymerizable composition for optical material to be prepared, the temperature may be preferably even lower than 25°C. However, when the solubility of additives such as an internal mold release agent and each of the above components is not favorable, the above components may be heated up in advance to dissolve the above additives in each of the above components.

When mixing the above components, it is preferable to do so under dry inert gas to prevent water from mixing into the polymerizable composition for optical material.

The preparation step is preferably a step of pre-mixing the two or more different monomers for optical material, and then mixing the mixture with the polymerization catalyst to produce the polymerizable composition for optical material.

This prevents the progress of polymerization of the two or more different monomers for optical material until the mixture of the two or more different monomers for optical material and the polymerization catalyst are mixed.

Therefore, by performing the preparation step in the above order, the timing of the start of polymerization can be adjusted. Therefore, for example, the handling property of the polymerizable composition for optical material when injected into a mold can be improved.

Specific aspects of the preparation step include, for example, the following.

First, the monomers for optical material and additives (for example, an internal mold release agent) are prepared to make a mixed liquid. The mixed liquid is stirred at 25°C for 1 hour to completely dissolve each component and obtain the mixed liquid.

The polymerization catalyst is then added to and completely dissolved in the mixed liquid under stirring to obtain a polymerizable composition for optical material as a uniform solution.

### <Casting Step>

The production method A includes a casting step of adjusting the viscosity of the polymerizable composition for optical material to 10 mPa·s to 1000 mPa·s as measured with a B-type viscometer at 20°C and 60 rpm, and casting the composition into a mold.

By adjusting the viscosity of the polymerizable composition for optical material within the above range and casting, the viscosity of the polymerizable composition for optical material produced in the step of producing a polymerizable composition for optical material can be within an appropriate range from the viewpoint of suppressing striae in the resulting optical material.

From the above viewpoint, the viscosity of the polymerizable composition for optical material is 10 mPa·s or more, preferably 20 mPa·s or more, more preferably 40 mPa·s or more, even more preferably 80 mPa·s or more, particularly preferably 100 mPa·s or more, and yet even more preferably 120 mPa·s or more.

From the viewpoint of maintaining favorable handling property of the optical material when molded into a desired shape, the viscosity of the polymerizable composition for optical material is 1000 mPa·s or less, preferably 700 mPa·s or less, and even more preferably 400 mPa·s or less.

There are no restrictions on the method of adjusting the viscosity of the polymerizable composition for optical material.

For example, the viscosity of the polymerizable composition for optical material may be adjusted by adding a compound of high viscosity, heating, stirring, or other methods.

### <Curing Step>

The production method A includes a curing step of polymerizing the two or more different monomers for optical material in the polymerizable composition for optical material in a mold to cure the polymerizable composition for optical material.

The inclusion of the curing step in the production method A allows the polymerizable composition for optical material to cure to produce an optical material.

In prior art, a polymerization reaction was caused by heating a polymerizable composition for optical material. On the other hand, in the polymerizable composition for optical material in the production method A, reaction heat associated with the polymerization reaction (that is, heat due to self-heating) is generated in a short time to accelerate the polymerization reaction of monomers for optical materials in the polymerizable composition for optical materials.

Therefore, in the production method A, heating of the polymerizable composition for optical material is not necessarily required, but may be done.

That is, in the curing step of the production method A, the polymerizable composition for optical material can be cured by polymerization by allowing the polymerizable composition for optical material to stand.

There are no restrictions on the environment in which the curing step is performed, and the mold may be cured by heating from the outside of the mold. However, from the viewpoint of polymerizing the composition in a short time while enhancing the optical quality such as striae, the step for curing the polymerizable composition for optical material is preferably performed by allowing the polymerizable composition for optical material to stand in a closed space.

By allowing the polymerizable composition for optical material to stand in a closed space, heat generated by self-heating of the polymerizable composition for optical material can be prevented from being released to the outside. This allows the heat generated by self-heating to be retained in the closed space, which accelerates the polymerization reaction more efficiently and allows the production of an optical material in a shorter time.

Examples of the closed space include insulated environments.

An insulated environment is one in which heat is retained inside and conduction of heat between inside and outside is inhibited. An environment in which heat conduction between the inside and outside is suppressed means an environment in which heat conductivity between the inside and outside of a closed space is sufficient to cure the polymerizable composition for optical material allowed to stand in the closed space.

An insulated environment can be formed, for example, using a heat-insulating material.

That is, by allowing the polymerizable composition for optical material to stand in a heat-insulating container made of a heat-insulating material, heat can be retained inside the heat-insulating container and conduction of heat between the inside and outside can be suppressed.

The thermal conductivity of the heat-insulating material is preferably 0.50 W/mK or less, more preferably 0.10 W/mK or less, and even more preferably 0.05 W/mK or less.

The density of the heat-insulating material is preferably 10 kg/m³ or more, more preferably 15 kg/m³ or more, and even more preferably 20 kg/m³ or more.

In the "insulation" or "insulated environment" in the production method A, it is preferable to heat the insulated reaction chamber to make it a constant temperature state (thermostatic reaction chamber) to the extent that the reaction heat of the polymerizable composition for optical material does not interfere with the polymerization reaction or excessively accelerate the polymerization reaction of the polymerizable composition for optical material by heating from the outside.

This allows the environmental temperature in the reaction vessel (thermostatic reaction chamber) in which the mold is placed to be maintained or thermostatically controlled according to the temperature rise due to self-heating of the monomers for optical material and other conditions, thereby accelerating the polymerization reaction more favorably.

Examples of the insulated environment include the insulated or thermostatic reaction chamber as described above.

For example, in the case where the mold injected with the monomers is allowed to stand in a vacuum vessel, which is an insulated reaction chamber, adiabatic polymerization in an insulated environment using an insulated reaction chamber (thermostatic reaction chamber) can be performed by the following procedure.

The inner surface of the vacuum vessel is covered with urethane foam, cork, or other heat-insulating and heat-retaining material, and the mold injected with the monomers is wrapped with wadding or other material as necessary. Then, the mold injected with the monomers is allowed to stand in the vacuum vessel.

The curing step may be a step of curing the polymerizable composition for optical material by allowing the polymerizable composition for optical material to stand without heating from the outside.

As described above, in the production method A, heating of the polymerizable composition for optical material is not necessarily required.

Heating from the outside may use equipment, which can increase the economic burden. With the production method A, optical materials can be produced by a simple method, thus reducing the economic burden.

The curing step is preferably a step of curing the polymerizable composition for optical material by allowing the polymerizable composition for optical material to stand for 6 to 20 hours.

According to prior art methods, the polymerization reaction is generally performed over several hours to several tens of hours (for example, about 20 to 48 hours) while the temperature is gradually increased by heating.

If the time for polymerization reaction is short, the polymerizable composition for optical material does not cure completely, so that an optical material cannot be obtained, or the quality of the optical material is deteriorated.

However, with the production method A, an optical material can be produced in a short time while maintaining the quality of the resulting optical material. Specifically, an optical material can be produced by allowing the polymerizable composition for optical material to stand for 20 hours or less.

From the above viewpoint, it is more preferable that the polymerizable composition for optical material is allowed to stand for 16 hours or less in the curing step.

In addition, from the viewpoint of performing the polymerization reaction to obtain a favorably cured optical material, the polymerizable composition for optical material is preferably allowed to stand for 7 hours or more, and more preferably 9 hours or more.

As necessary, the curing step may include a microwave irradiation step of irradiating the polymerizable composition for optical material with a microwave for a predetermined time.

One aspect of the curing step includes the following steps a and b.

Step a: The polymerizable composition for optical material is injected (cast) into a mold (inside the cavity of the mold).

Step b: The mold injected with the polymerizable composition for optical material is allowed to stand in a closed space for a predetermined time for adiabatic polymerization.

### (Step a)

First, the polymerizable composition is injected into a mold held by a gasket or tape. At this time, depending on the properties required for the optical material to be obtained, it is preferable to perform defoaming under reduced pressure, filtration under pressurized or reduced pressure, or the like, as necessary.

### (Step b)

There are no restrictions on the polymerization conditions, but the conditions are preferably adjusted as appropriate according to the composition of the polymerizable composition for optical material, the type and amount of the catalyst used, and the shape of the mold.

The monomers for optical material in the polymerizable composition for optical material may be polymerized by allowing the mold injected with the polymerizable composition for optical material to stand in an insulated environment for 6 to 20 hours.

In the step b, as necessary, a heating step may be performed after the adiabatic polymerization process in which the mold injected with the polymerizable composition for optical material is allowed to stand in an insulated environment for a certain time.

In the step b, as necessary, in parallel with the step of allowing the mold injected with the polymerizable composition for optical material to stand in an insulated environment (adiabatic polymerization), the mold injected with the polymerizable composition for optical material may be heated continuously or intermittently at a temperature not exceeding the self-heating generated by the polymerizable composition for optical material in the adiabatic polymerization process, or the environmental temperature in the insulated reaction vessel may be maintained by heating the inside of the insulated reaction chamber.

### <Annealing Step>

The production method A may include an annealing step of annealing the cured polymerizable composition for optical material as necessary.

The annealing temperature is typically from 50 to 150°C, preferably from 90 to 140°C, and more preferably from 100 to 130°C.

### <Other Step>

The production method A may include another step as necessary.

An example of the other step is an injection step of injecting the polymerizable composition for optical material into a mold to produce an optical material using a mold.

### <Applications of Optical Material>

The optical material by the production method A can be used, for example, for plastic lenses, prisms, optical fibers, information recording substrates, filters, and light emitting diodes.

Among the above, the optical material in the first embodiment is preferably used for plastic lenses, and is more preferably used for plastic lenses for eyeglasses.

### <Production Method B>

The production method B includes: a preparation step of preparing two or more different monomers for optical material and a polymerization catalyst having a content of from 0.1150 to 0.2000 parts by mass relative to the total amount of the two or more different monomers for optical material; and a prepolymerization step of mixing at least a part of the two or more different monomers for optical material and at least a part of the polymerization catalyst, and polymerizing at least a part of the two or more different monomers for optical material to obtain a prepolymer, thereby obtaining a mixture containing the prepolymer, in which at least one of the two or more different monomers for optical material is an episulfide compound.

The production method B includes the preparation step and prepolymerization step to suppress striae in the resulting optical material, and to reduce the production time of the optical material.

The production method B preferably further includes, in addition to the preparation step and the prepolymerization step described above, a step of producing a polymerizable composition for optical material, in which the mixture containing the prepolymer is mixed with the remainder of the polymerization catalyst or a mixture of the remainder of the two or more different monomers for optical material and the remainder of the polymerization catalyst to obtain a polymerizable composition for optical material including the two or more different monomers for optical material, the prepolymer, and the polymerization catalyst; and
a curing step of curing the two or more different monomers for optical material in the polymerizable composition for optical material to obtain an optical material, which is a cured product of the polymerizable composition for optical material.

The production method B further includes, in addition to the preparation step and prepolymerization step, the step of producing a polymerizable composition for optical material and the curing step to more favorably suppress striae in the resulting optical material, and to more favorably reduce the production time of the optical material.

The polymerizable composition for optical material prepared in the preparation step in the production method B has a content of from 0.1150 to 0.2000 parts by mass relative to the total amount of the two or more different monomers for optical material. As in the case of the production method A, the content of the polymerization catalyst is greater compared to that in prior art methods for producing optical materials.

Therefore, as in the case of the production method A, a high-quality optical material with suppressed striae can be obtained in a shorter time than in prior art methods.

As in the case of the production method A, heating of the polymerizable composition for optical material is not necessarily required in the production method B.

In addition, the production method B includes the preparation step, prepolymerization step, step of producing a polymerizable composition for optical material, and curing step to suppress convection currents in the mold where the polymerization reaction takes place, and to suppress the generation of striae in the resulting cured product.

In addition, the production method B includes the prepolymerization step to maintain the storage stability of the mixture containing the prepolymer (for example, a polymerizable composition for optical material) better than in the case without prepolymerization.

For example, when the mixture containing the prepolymer is stored for a certain period of time, polymerization reactions within the mixture can be suppressed. In other words, a longer pot life can be ensured.

### <Preparation Step>

The production method B includes a preparation step of preparing two or more different monomers for optical material and a polymerization catalyst having a content of from 0.1150 to 0.2000 parts by mass relative to the total amount of the two or more different monomers for optical material.

In the preparation step, two or more different monomers for optical material and a polymerization catalyst having a content of from 0.1150 to 0.2000 parts by mass relative to the total amount of the two or more different monomers for optical material are prepared.

That is, the production method B uses two or more different monomers for optical material and a polymerization catalyst having a content of from 0.1150 to 0.2000 parts by mass relative to the total amount of the two or more different monomers for optical material.

The use of the polymerization catalyst having a content of 0.1150 parts by mass or more relative to the total amount of the two or more different monomers for optical material favorably accelerates the polymerization reaction, so that a high-quality optical material with suppressed striae can be obtained in a short time. In addition, by accelerating the polymerization reaction favorably, the mold release property of the cured product when removed from the mold can be improved.

From the above viewpoint, the content of the polymerization catalyst relative to the total amount of the two or more different monomers for optical material is preferably 0.1175 parts by mass or more, and more preferably 0.125 parts by mass or more.

The use of the polymerization catalyst having a content of 0.2000 parts by mass relative to the total amount of the two or more different monomers for optical material improves, for example, the handling property of the polymerizable composition for optical material when injected into a mold.

From the above viewpoint, the content of the polymerization catalyst relative to the total amount of the two or more different monomers for optical material is preferably 0.1800 parts by mass or less, and more preferably 0.1500 parts by mass or less.

The amount of the polymerization catalyst can be set as appropriate according to the type of polymerization catalyst, the type and amount of monomers (for example, episulfide compounds or other components) used, and the desired shape of the molding.

### <Prepolymerization Step>

The production method B includes a prepolymerization step of mixing at least a part of the two or more different monomers for optical material and at least a part of the polymerization catalyst, and polymerizing at least a part of the two or more different monomers for optical material to obtain a prepolymer, thereby obtaining a mixture containing the prepolymer.

The present inventors considered that convection caused by non-uniform temperature distribution in the mold where the polymerization reaction takes place is one of the reasons for the generation of striae in the resulting cured product.

Therefore, the present inventors produced a prepolymer by pre-polymerizing a part of the monomers for optical material, and focused on the fact that the inclusion of the prepolymer in the polymerizable composition for optical material increases the viscosity of the polymerizable composition for optical material. This can suppress convection in the mold.

In addition, in the production method B, the temperature difference between the inside and outside of the mold is reduced by preventing self-heating from being released to the outside.

It is presumed that the combination of the above perspectives enables the production method B to suppress the striae of the resulting cured product.

In the production method B, in the prepolymerization step, a prepolymer with excellent pot life can be obtained by including all of one monomer for optical material out of the two or more different monomers for optical material, all or a part of another monomer for optical material other than the one monomer for optical material, and all or a part of the polymerization catalyst.

There are no restrictions on the form of "a part of the two or more different monomers for optical material".

For example, "a part of the two or more different monomers for optical material" may be a partial amount of each of the two or more different monomers for optical material.

Alternatively, "a part of the two or more different monomers for optical material" may be the whole of one or more monomers for optical material from the two or more different monomers for optical material.

In the prepolymerization step, the polymerization catalyst may be used in part or in whole.

When a part is used as a polymerization catalyst, there are no restrictions on the aspect in which "a part of the polymerization catalyst" is used, as in the case of "a part of the two or more different monomers for optical material".

For example, "a part of the polymerization catalyst" may be a partial amount of the polymerization catalyst.

When a part of the polymerization catalyst is used, from the viewpoint of ensuring a long pot life, the part of the polymerization catalyst is preferably from 5 to 80 parts by mass, more preferably from 10 to 60 parts by mass, and even more preferably from 15 to 50 parts by mass out of 100 parts by mass of the polymerization catalyst.

A part of the two or more different monomers for optical material is, from the viewpoint of ensuring a long pot life, preferably from 5 to 95 parts by mass, more preferably from 10 to 80 parts by mass, and even more preferably from 20 to 70 parts by mass out of 100 parts by mass of the two or more different monomers for optical material.

The production method B preferably includes a prepolymerization step of mixing all of the two or more different monomers for optical material and a part of the polymerization catalyst, and polymerizing at least a part of the two or more different monomers for optical material to obtain a prepolymer, thereby obtaining a mixture containing the prepolymer.

Examples of the specific aspects of the prepolymerization step are described below, but the prepolymerization step in the production method B is not limited to the following aspects.

### (Aspect a)

The prepolymerization step in the aspect A includes mixing a part of the two or more different monomers for optical material and all of the polymerization catalyst, and polymerizing at least a part of a part of the two or more different monomers for optical material to obtain a prepolymer, thereby obtaining a mixture containing the prepolymer.

In the aspect a, it is preferable that a part of the two or more different monomers for optical material includes all of one of the two or more different monomers for optical material and a part of another monomer for optical material other than the one monomer for optical material.

### (Aspect b)

The prepolymerization step in the aspect b includes mixing a part of the two or more different monomers for optical material and a part of the polymerization catalyst, and polymerizing at least a part of a part of the two or more different monomers for optical material to obtain a prepolymer, thereby obtaining a mixture containing the prepolymer.

When the production method B includes the prepolymerization step in the aspect b, the below-described step of producing a polymerizable composition for optical material includes mixing the mixture containing the prepolymer with at least the remainder of the two or more different monomers for optical material and the remainder of the polymerization catalyst to obtain a polymerizable composition for optical material including the two or more different monomers for optical material, the prepolymer, and the polymerization catalyst.

### <Viscosity adjustment step>

The production method B preferably further includes a viscosity adjustment step of adjusting the viscosity of the mixture containing the prepolymer from 10 mPa·s to 1000 mPa·s after the prepolymerization step and before the step of producing a polymerizable composition for optical material.

Since the mixture containing the prepolymer has a viscosity within the above range, the viscosity of the polymerizable composition for optical material produced in the step of producing a polymerizable composition for optical material can be within an appropriate range from the viewpoint of suppressing striae in the resulting optical material. As a result, striae in the resulting optical material can be suppressed.

From the above viewpoint, the viscosity of the mixture containing the prepolymer is preferably from 40 mPa·s to 1000 mPa·s, and is more preferably from 50 mPa·s to 800 mPa·s.

The viscosity is measured using a B-type viscometer at 20°C and 60 rpm (revolutions per minute).

There are no restrictions on the method of adjusting the viscosity of the mixture containing the prepolymer.

For example, the viscosity of the mixture containing the prepolymer may be adjusted by adding a compound of high viscosity, heating, stirring, or other methods.

There are no restrictions on the temperature at which the mixture containing the prepolymer is prepared, as long as the temperature is at which the prepolymer can be obtained through the polymerization reaction. For example, the temperature may be from 20°C to 50°C, or from 25°C to 45°C.

There are no restrictions on the stirring time for preparing the mixture containing the prepolymer, as long as the stirring time is sufficient to obtain the prepolymer in the polymerization reaction. For example, the time may be from 30 minutes to 10 hours, or from 1 hour to 10 hours.

The method of preparing the mixture containing the prepolymer may specifically be a method of preparing the mixture containing the prepolymer by stirring at 20°C for 6 hours while adjusting the viscosity.

### <Step of Producing Polymerizable Composition for Optical Material>

The production method B includes a step of producing a polymerizable composition for optical material, in which the mixture containing the prepolymer is mixed with the remainder of the polymerization catalyst or a mixed liquid of the remainder of the two or more different monomers for optical material and the remainder of the polymerization catalyst (in the present disclosure, also referred to as the remainder of the polymerization catalyst and others) to obtain a polymerizable composition for optical material including the two or more different monomers for optical material, the prepolymer, and the polymerization catalyst.

The step of producing a polymerizable composition for optical material includes mixing the mixture containing the prepolymer with the remainder of the polymerization catalyst and others to obtain a polymerizable composition for optical material including the two or more different monomers for optical material, the prepolymer, and the polymerization catalyst.

This prevents polymerization between the remaining reactive groups in the mixture containing the prepolymer until the mixture containing the prepolymer and the remainder of the polymerization catalyst and others are mixed.

Therefore, by performing the step of producing a polymerizable composition for optical material at an appropriate time, for example, the handling property of the polymerizable composition for optical material when injected into a mold is improved.

When adding the remainder of the polymerization catalyst and others to the mixture containing the prepolymer in the step of producing a polymerizable composition for optical material, the remainder of the polymerization catalyst may be mixed in a single step or in multiple steps.

There are no restrictions on the temperature at which the above components are mixed, but the temperature is preferably 30°C or lower, and more preferably room temperature (25°C) or lower.

The temperature at the time of mixing the components may be preferably lower than 25°C. However, when the solubility of additives such as an internal mold release agent and each of the above components is not favorable, the above components may be heated up in advance to dissolve the above additives in each of the above components.

Specific aspects of the step of producing a polymerizable composition for optical material include, for example, the following.

First, additives (for example, internal mold release agent) are added to the mixture containing the prepolymer to make a mixed liquid. The mixed liquid is stirred at 25°C for 1 hour to completely dissolve each component, and then degassed to obtain a first mixed liquid.

In addition, the remainder of the polymerization catalyst is prepared. As necessary, the remainder of the monomers for optical material and the remainder of the polymerization catalyst are stirred at 25°C for 30 minutes to dissolve them completely to obtain a second mixed liquid.

Then, the first mixed liquid and the remainder of the polymerization catalyst, or the first mixed liquid and the second mixed liquid are mixed with stirring, and then degassed to obtain a polymerizable composition for optical material as a uniform solution.

### <Liquid Feeding Step>

The production method B may further include a liquid feeding step of feeding the polymerizable composition for optical material into a casting mold after the step of producing a polymerizable composition for optical material and before the curing step.

The liquid feeding step may include feeding the polymerizable composition for optical material into a casting mold while remixing in a stationary mixer.

The liquid feeding step may include feeding the polymerizable composition for optical material into a casting mold while remixing by a dynamic mixer.

This eliminates the non-uniformity of the distribution of the polymerizable composition for optical material during feeding of the polymerizable composition for optical material into the mold, thereby suppressing the striae in the resulting cured product.

### <Curing Step>

The production method B includes a curing step of curing the two or more different monomers for optical material in the polymerizable composition for optical material to obtain an optical material that is a cured product of the polymerizable composition for optical material.

The specific aspect, preferable aspect, and others of the curing step in the production method B are the same as the details of the specific aspect, preferable aspect, and others described in the section of the <Curing Step> in the production method A described above.

### <Annealing Step>

The production method B may include an annealing step of annealing the cured polymerizable composition for optical material as necessary.

Preferable aspects and others of the annealing step in the production method B are the same as the preferable aspects and others of the annealing step in the production method A.

### <Other Step>

The production method B may include other steps as necessary.

The specific aspect, preferable aspect, and others of the other steps in the production method B are the same as the specific aspect, preferable aspect, and others described in the section of the other steps in the production method A described above.

### <Applications of Optical Material>

Specific examples, preferable specific examples, and others of applications of the optical material in the production method B are the same as specific examples, preferable specific examples, and others of applications of the optical material in the production method A.

### -Second Embodiment-

### <<Method for Producing Optical Material>>

The method for producing an optical material according to the second embodiment includes: a preparation step of preparing a polymerizable composition for optical material including monomers for optical material and a polymerization catalyst, in which the monomers for optical material includes an episulfide compound, and the content of the polymerization catalyst relative to the total amount of the monomers for optical material is from 0.1150 to 0.2000 parts by mass; and a curing step of polymerizing the monomers for optical material in the polymerizable composition for optical material to cure the polymerizable composition for optical material.

In the method for producing an optical material of the second embodiment, specific and preferable aspects of the content of the episulfide compound, monomers for optical material, polymerization catalyst, and polymerization catalyst are the same as the specific and preferable aspects of the content of the episulfide compound, monomers for optical material, polymerization catalyst, and polymerization catalyst of the first embodiment described above.

Specific and preferable aspects of the preparation step are the same as the specific and preferable aspects of the preparation step of the first embodiment described above.

Specific and preferable aspects of the curing step are the same as the specific and preferable aspects of the curing step of the first embodiment described above.

In the method for producing an optical material of the second embodiment, the details of specific examples, preferable specific examples, specific aspects, preferable aspects, and others of the components are the same as the details of specific examples, preferable specific examples, specific aspects, preferable aspects, and others of the components in the method for producing the optical material of the first embodiment.

A second embodiment of the present disclosure includes the following aspects.
<2-1> A method for producing an optical material, including: a preparation step of preparing a polymerizable composition for optical material including monomers for optical material and a polymerization catalyst, in which the monomers for optical material includes an episulfide compound, and the content of the polymerization catalyst relative to the total amount of the monomers for optical material is from 0.1150 to 0.2000 parts by mass; and a curing step of polymerizing the monomers for optical material in the polymerizable composition for optical material in the mold to cure the polymerizable composition for optical material.
<2-2> The method for producing an optical material according to <2-1>, in which the preparation step includes pre-mixing all the monomers for optical material, and then mixing the mixture with the polymerization catalyst to prepare the polymerizable composition for optical material.
<2-3> The method for producing an optical material according to <2-1> or <2-2>, in which the preparation step includes pre-mixing a part of the monomers for optical material with the polymerization catalyst, and then mixing the mixture with the remainder of the monomers for optical material to prepare the polymerizable composition for optical material.
<2-4> The method for producing an optical material according to any one of <2-1> to <2-3>, in which the curing step includes curing the polymerizable composition for optical material by allowing the polymerizable composition for optical material to stand in a closed space.
<2-5> The method for producing an optical material according to any one of <2-1> to <2-4>, in which the curing step includes curing the polymerizable composition for optical material by allowing the polymerizable composition for optical material to stand without heating from the outside.
<2-6> The method for producing an optical material according to any one of <2-1> to <2-5>, in which the curing step includes curing the polymerizable composition for optical material by allowing the polymerizable composition for optical material to stand for 6 to 20 hours.
<2-7> The method for producing an optical material according to any one of <2-1> to <2-6>, in which the monomers for optical material further include at least one of a polythiol compound and an isocyanate compound.
<2-8> The method for producing an optical material according to any one of <2-1> to <2-7>, in which the polymerization catalyst includes an amine-based catalyst.
<2-9> The method for producing an optical material according to any one of <2-1> to <2-8>, in which the polymerization catalyst includes at least one of N,N-dimethylcyclohexylamine and N,N-dicyclohexylmethylamine.
<2-10> A polymerizable composition for optical material including monomers for optical material including an episulfide compound, and a polymerization catalyst, in which the content of the polymerization catalyst relative to the total amount of the monomers for optical material is from 0.1150 to 0.2000 parts by mass.

### [Examples]

The polythiol compound used in the present example can be produced by the method described in WO 2014/027665 A.

In the present example, pKa was measured by the method described above.

### <Example A>

The first and second embodiments of the present disclosure are specifically described below by Example A, but the first and second embodiments are not limited to the example.

The method for measuring viscosity in Example A is the same as described above.

The following evaluations were performed on the moldings obtained in Examples and Comparative Examples.

### (Striae)

The molding was projected by an ultra-high-pressure mercury lamp (light source type, OPM-252HEG, manufactured by Ushio Inc.), and the transmitted image was visually observed and evaluated according to the following criteria.
A: No striae were observed, or striae were not clearly observed. Specifically, no striae longer than 1.0 mm in length were visually observed within and outside a 15 mm radius from the center of the molding.
B: Although striae were observed, the product was generally acceptable. Specifically, although striae with a length of 1.0 mm or more were visually observed outside the 15 mm radius from the center of the molding, no striae with a length of 1.0 mm or more were visually observed within the 15 mm radius from the center of the molding, which was generally acceptable as a product.
C: Striae were observed, and the product was unacceptable. Specifically, striae of 1.0 mm or more in length were visually observed within and outside a 15 mm radius from the center of the molding.

### (Mold Release Property)

The mold release property of the molding when releasing the molding from the mold was evaluated based on the following criteria.
A: The molding was released without force.
B: The molding was released when force was applied.
C: The molding was released when force was applied, but the mold or lens could be damaged.
D: The molding did not release when force was applied, so no product was obtained.

### [Examples 1A to 6A]

To 100.0 parts by mass of bis(2,3-epithiopropyl)disulfide [episulfide compound], 1.1 parts by mass of 2-(5-tert-butyl-2-hydroxyphenyl)benzotriazole [UV absorbing agent] were added and stirred at 20°C for 30 minutes to dissolve the compound. To the mixed liquid, 10.0 parts by mass of a mixture [polythiol compound] composed mainly of 4,8-dimercaptomethyl-1,11-dimercapto-3,6,9-trithiaoundecane, 4,7-dimercaptomethyl-1,11-dimercapto-3,6,9-trithiaoundecane, and 5,7-dimercaptomethyl-1,11-dimercapto-3,6,9-trithiaoundecane was added and stirred at 20°C for 10 minutes. Then, the amounts of N,N-dimethylcyclohexylamine [DCA, polymerization catalyst, pKa: 10.7] and N,N-dicyclohexylmethylamine [DCH, polymerization catalyst, pKa: 11.0] were added in the amounts listed in Table 1, and stirred at 15°C for 5 minutes to obtain a uniform solution. The solution was defoamed at 400 Pa for 10 minutes to obtain a polymerizable composition for optical material.

The content of the polymerization catalyst listed in Table 1 means the content of the polymerization catalyst relative to the total amount of the monomers for optical material (that is, the episulfide compound and polythiol compound).

Table 1 shows the viscosity and thixotropic ratio of the polymerizable composition for optical material, measured with a B-type viscometer at 20°C and 60 rpm.

The polymerizable composition for optical material was injected into the cavity of a mold die at a rate of 10 g/sec while filtering through a 1 µm PTFE filter.

The molds of the following sizes were used for the above molds.
S = -6.25 D, center thickness: 1.1 mm, peripheral thickness: 9 mm
S = -2.25 D, center thickness: 1.1 mm, peripheral thickness: 4 mm
4 curves, center thickness: 2 mm
4 curves, center thickness: 7 mm
4 curves, center thickness: 10 mm

The total amount of the monomers for optical material in the polymerizable composition for optical material was 32 g for S = -6.25 D, 16 g for S = -2.25 D, 14 g for 4 curves with 2 mm center thickness, 50 g for 4 curves with 7 mm center thickness, and 65 g for 4 curves with 10 mm center thickness.

The casting was placed in an insulated container at 25°C and allowed to stand for the time listed in Table 1 for adiabatic polymerization, after which the cured molding was released from the mold, and further annealed at 110°C for 1 hour to obtain the molding (lens).

Table 1 shows the results of striae and mold release property for the obtained moldings.

Table 1 shows the amine content of the obtained moldings (that is, cured products), as measured by gas chromatography-mass spectrometry.

### [Comparative Example 1A]

A polymerizable composition was obtained in the same manner as in Examples 1A to 6A, except that the catalyst amount was as described in Table 1, and was injected into the cavity of a mold and polymerized, but did not cure completely. Therefore, mold release property and striae were not evaluated.

### [Comparative Example 2A]

Polymerization was performed in the same manner as in Comparative Example 1A, except that the casting in Comparative Example 1A was cured with a polymerization program (temperature increase program) such that the object was cured in 42 hours. The cured molding was released and further annealed at 110°C for 1 hour.

Table 1 shows the results of striae and mold release property for the obtained moldings.

**[Table 1]**

| | | | Example 1A | Example 2A | Example 3A | Example 4A | Example 5A | Example 6A | Comparative Example 1A | Comparative Example 2A |
|---|---|---|---|---|---|---|---|---|---|---|
| Condition | | | Adiabatic polymerization | | | | | | Adiabatic polymerization | Heat polymerization |
| Polymerizable composition for optical material | Catalyst (parts by mass) | DCA | 0.04 | 0.03 | | | 0.02 | 0.015 | 0.0125 | 0.0125 |
| | | DCH | 0.1 | | | | | | 0.1 | 0.1 |
| | Thixotropic ratio | | 1.0 | 1.0 | 1.0 | 1.0 | 1.0 | 1.0 | 1.0 | 1.0 |
| | Viscosity (mPa ·s) | | 32.5 | 32.5 | 32.5 | 32.5 | 32.5 | 32.5 | 32.5 | 32.5 |
| Heat insulation time (h) | | | 10 | 10 | 12 | 15 | 10 | 18 | 18 | - |
| Heating time (h) | | | - | - | - | - | - | - | - | 42 |
| Extracted amount of amine in cured product (% by mass) | | | 0.0747 | 0.0639 | 0.0639 | 0.0639 | 0.0635 | 0.0607 | 0.0593 | 0.0593 |
| S = -6.25D | | Mold release property | A | A | A | A | - | - | D | A |
| | | Striae | B | A | A | A | | | - | A |
| S = -2.25D | | Mold release property | A | B | A | A | - | - | D | A |
| | | Striae | A | A | A | A | | | - | A |
| 4 curves, center thickness: 2 mm | | Mold release property | A | B | B | A | - | - | D | A |
| | | Striae | A | A | A | A | | | - | A |
| 4 curves, center thickness: 7 mm | | Mold release property | - | - | - | - | A | A | D | A |
| | | Striae | | | | | A | A | - | A |
| 4 curves, center thickness: 10 mm | | Mold release property | - | - | - | - | A | A | D | A |
| | | Striae | | | | | B | A | - | A |

As described above, moldings having favorable mold release property and striae were obtained in as short a time as 10 to 18 hours in Examples 1A to 6A where the preparation step of preparing a polymerizable composition for optical material including monomers for optical material and a polymerization catalyst was performed, in which the monomers for optical material includes an episulfide compound, and the content of the polymerization catalyst relative to the total amount of the monomers for optical material is from 0.1150 to 0.2000 parts by mass.

In particular, in Examples 1A to 5A, where the content of the polymerization catalyst relative to the total amount of the monomers for optical material was 0.1200 parts by mass or more, moldings having favorable mold release property and striae were obtained in a shorter time.

On the other hand, in Comparative Example 1A, where the content of the polymerization catalyst relative to the total amount of the monomers for optical material was less than 0.1150 parts by mass and the polymerizable composition for optical material was allowed to stand in an insulated environment for adiabatic polymerization, had poor mold release property, and no favorable molding was obtained.

In Comparative Example 2A where the content of the polymerization catalyst relative to the total amount of the monomers for optical material was less than 0.1150 parts by mass, a molding with favorable mold release property and striae was obtained, but it required heating using a polymerization oven and a longer polymerization time than in the Examples.

Fig. 1 shows a graph representing the relationship between the polymerization time and temperature in the case of producing a molding using the polymerizable compositions for optical material of Examples 1A, 2A to 4A, 5A, and 6A, with the total mass of the monomers for optical material in the polymerizable composition for optical material being 30 g.

### <Example B>

The production method B of the first embodiment is specifically described below by Example B, but the production method B of the first embodiment is not limited to the example.

The method for measuring viscosity in Example B is the same as described above.

In Example B, the amine content in the cured product was measured by the above-described method.

The following evaluations were performed on the moldings obtained in Examples and Comparative Examples.

### (Striae)

The molding was projected by an ultra-high-pressure mercury lamp (light source type, OPM-252HEG, manufactured by Ushio Inc.), and the transmitted image was visually observed and evaluated according to the following criteria.
A: No striae were observed. Specifically, no striae longer than 1.0 mm in length were visually observed within and outside a 15 mm radius from the center of the molding.
B: Although striae were observed, the product was generally acceptable. Specifically, although striae with a length of 1.0 mm or more were visually observed outside the 15 mm radius from the center of the molding, no striae with a length of 1.0 mm or more were visually observed within the 15 mm radius from the center of the molding, which was generally acceptable as a product.
C: Striae were observed, and the product was unacceptable. Specifically, striae of 1.0 mm or more in length were visually observed within and outside a 15 mm radius from the center of the molding.

### (Mold Release Property)

The mold release property of the molding when releasing the molding from the mold was evaluated based on the following criteria.
A: The molding was released without force.
B: The molding was released when force was applied.
C: The molding was released when force was applied, but the mold or lens could be damaged.
D: The molding did not release when force was applied, so no product was obtained.

### [Example 1B]

To 100.0 parts by mass of bis(2,3-epithiopropyl)disulfide [episulfide compound], 1.1 parts by mass of 2-(5-tert-butyl-2-hydroxyphenyl)benzotriazole [UV absorbing agent] were added and stirred at 20°C for 30 minutes to dissolve the compound. To this mixed liquid, 10.0 parts by mass of a mixture [polythiol compound] composed mainly of 4,8-dimercaptomethyl-1,11-dimercapto-3,6,9-trithiaoundecane, 4,7-dimercaptomethyl-1,11-dimercapto-3,6,9-trithiaoundecane, and 5,7-dimercaptomethyl-1,11-dimercapto-3,6,9-trithiaoundecane was added and stirred at 20°C for 10 minutes to obtain a uniform solution.

To the resulting uniform solution, 0.02 parts by mass of N,N-dimethylcyclohexylamine [DCA, polymerization catalyst] was added and stirred at 20°C for 6 hours. The monomers for optical material were polymerized while adjusting the viscosity, and the solution was defoamed at 400 Pa for 10 minutes to obtain a mixed liquid containing a prepolymer. Table 2 shows the viscosity of the mixture containing the prepolymer.

To the resulting mixed liquid, 0.1 parts by mass of N,N-dicyclohexylmethylamine [DCH, polymerization catalyst] was added and mixed at 20°C to obtain a polymerizable composition for optical material.

Table 2 shows Refractive index A of the polymerizable prepolymer composition for optical material minus Refractive index B of the prepolymer raw material composition, which is the composition before forming the prepolymer and includes two or more different monomers for optical material and a polymerization catalyst (also called "Refractive index A - Refractive index B").

Table 2 shows the viscosity and thixotropic ratio of the polymerizable composition for optical material, measured with a B-type viscometer at 20°C and 60 rpm.

The resulting polymerizable composition for optical material was fed into a casting mold while remixing in a stationary mixer.

The viscosity of the polymerizable composition for optical material when fed to and casted into the mold (also called casting viscosity) was adjusted to the values shown in Table 2.

The polymerizable composition for optical material was injected into the cavity of a mold die at a rate of 10 g/sec while filtering through a 1 µm PTFE filter.

The molds of the following sizes were used for the above molds.
S = -6.25 D, center thickness: 1.1 mm, peripheral thickness: 9 mm
4 curves, center thickness: 2 mm
4 curves, center thickness: 7 mm

The casting was placed in a heat-insulating container at 25°C and allowed to stand for 5 hours to perform adiabatic polymerization. The cured molding was then released from the mold, and further annealed at 110°C for 1 hour to obtain a molding (lens).

[Example 2B]

A molding (lens) was obtained in the same manner as in Example 1B, except that the DCA content was changed to 0.03 parts by mass. The cured molding was released and further annealed at 110°C for 1 hour.

Table 1 shows the results of striae and mold release property for the obtained moldings.

**[Table 2]**

| | | | Example 1B | Example 2B |
|---|---|---|---|---|
| Prepolymerization step | Catalyst concentration (parts by mass) | DCA | 0.02 | 0.03 |
| | Stirring time (h) | | 6 | 6 |
| | Refractive index A - Refractive index B | | 0.0010 | 0.0014 |
| | Viscosity of mixture containing prepolymer (mPa·s) | | 32.5 | 32.5 |
| Catalyst concentration (parts by mass) | | DCH | 0.1 | 0.1 |
| Thixotropic ratio | | | 1.0 | 1.0 |
| Casting viscosity | | | 43.0 | 43.5 |
| Adiabatic polymerization time (h) | | | 5 | 5 |
| Extracted amount of amine in cured product (% by mass) | | | 0.0635 | 0.0639 |
| S = -6.25D | | Mold release property | A | A |
| | | Striae | A | A |
| 4 curves, center thickness: 2 mm | | Mold release property | A | A |
| | | Striae | A | A |
| 4 curves, center thickness: 7 mm | | Mold release property | A | A |
| | | Striae | A | B |

As shown in Table 2, the striae evaluation was excellent and the striae was suppressed in the examples that used the method for producing an optical material, including: a preparation step of preparing two or more different monomers for optical material and a polymerization catalyst having a content of from 0.1150 to 0.2000 parts by mass relative to the total amount of the two or more different monomers for optical material; and
a prepolymerization step of mixing at least a part of the two or more different monomers for optical material and at least a part of the polymerization catalyst, and polymerizing at least a part of the two or more different monomers for optical material to obtain a prepolymer, thereby obtaining a mixture containing the prepolymer, in which at least one of the two or more different monomers for optical material is an episulfide compound. **In** addition, the polymerization time was 5 hours, indicating the reduction in the production time of the optical material.

## Claims

1. A polymerizable composition for an optical material, comprising:
two or more different monomers for an optical material, and a polymerization catalyst, wherein:
a content of the polymerization catalyst relative to a total amount of the monomers for an optical material is from 0.1150 to 0.2000 parts by mass,
a viscosity of the polymerizable composition for an optical material is from 10 mPa·s to 1000 mPa·s as measured with a B-type viscometer at 20°C and 60 rpm, and
at least one of the two or more different monomers for an optical material is an episulfide compound,
wherein the two or more different monomers for an optical material comprise at least one selected from the group consisting of polythiol compounds, polyol compounds, isocyanate compounds and amine compounds.

2. The polymerizable composition for an optical material according to claim 1, which has a thixotropic ratio of 1.3 or less.

3. The polymerizable composition for an optical material according to claim 1 or 2, comprising:
the two or more different monomers for an optical material, the polymerization catalyst, and
a prepolymer that is a polymer of the two or more different monomers for an optical material and has a polymerizable functional group,
wherein at least one of the two or more different monomers for an optical material is an episulfide compound.

4. The polymerizable composition for an optical material according to any one of claims 1 to 3, wherein the polymerization catalyst comprises at least one selected from the group consisting of basic catalysts having a pKa value of from 5 to 12, and organometallic catalysts.

5. A cured product of the polymerizable composition for an optical material according to any one of claims 1 to 4.

6. The cured product according to claim 5, wherein there are no striae with a length of 1.0 mm or more within a radius of 15 mm from the center of the cured product.

7. The cured product according to any one of claims 5 or 6, wherein the amine content is from 0.01% by mass to 0.20% by mass as measured by gas chromatography-mass spectrometry.

8. A method for producing an optical material, comprising:
a preparation step of preparing a polymerizable composition for an optical material, which comprises two or more different monomers for an optical material, and a polymerization catalyst, at least one of the two or more different monomers for an optical material being an episulfide compound, and a content of the polymerization catalyst relative to a total amount of the two or more different monomers for an optical material being from 0.1150 to 0.2000 parts by mass, wherein the two or more different monomers for an optical material comprise at least one selected from the group consisting of polythiol compounds, polyol compounds, isocyanate compounds and amine compounds;
a casting step of adjusting a viscosity of the polymerizable composition for an optical material to from 10 mPa·s to 1000 mPa·s as measured with a B-type viscometer at 20°C and 60 rpm, and casting the polymerizable composition for an optical material into a mold; and
a curing step of polymerizing the two or more different monomers for an optical material in the polymerizable composition for an optical material in the mold, to cure the polymerizable composition for an optical material

9. A method for producing an optical material, comprising:
a preparation step of preparing two or more different monomers for an optical material, and a polymerization catalyst having a content of from 0.1150 to 0.2000 parts by mass relative to a total amount of the two or more different monomers for an optical material; and
a prepolymerization step of mixing at least a part of the two or more different monomers for an optical material and at least a part of the polymerization catalyst, and polymerizing at least a part of the two or more different monomers for an optical material to obtain a prepolymer, thereby obtaining a mixture containing the prepolymer,
wherein at least one of the two or more different monomers for an optical material is an episulfide compound,
wherein the two or more different monomers for an optical material comprise at least one selected from the group consisting of polythiol compounds, polyol compounds, isocyanate compounds and amine compounds.

10. The method for producing an optical material according to claim 9, further comprising:
a step of producing a polymerizable composition for an optical material, wherein the mixture containing the prepolymer is mixed with a remainder of the polymerization catalyst or a mixed liquid of a remainder of the two or more different monomers for an optical material and the remainder of the polymerization catalyst to obtain a polymerizable composition for an optical material , which comprises the two or more different monomers for an optical material, the prepolymer, and the polymerization catalyst; and
a curing step of curing the two or more different monomers for an optical material in the polymerizable composition for an optical material to obtain an optical material, which is a cured product of the polymerizable composition for an optical material.

11. The method for producing an optical material according to any one of claims 8 to 10, wherein the polymerization catalyst comprises at least one selected from the group consisting of basic catalysts having a pKa value of from 5 to 12, and organometallic catalysts.

12. The method for producing an optical material according to any one of claims 8 to 11, wherein the polymerization catalyst comprises at least one selected from the group consisting of amine-based catalysts and organotin-based catalysts.

## Patentansprüche

1. Polymerisierbare Zusammensetzung für ein optisches Material, umfassend:
zwei oder mehr verschiedene Monomere für ein optisches Material und einen Polymerisationskatalysator, wobei:
ein Gehalt des Polymerisationskatalysators, bezogen auf eine Gesamtmenge der Monomere für ein optisches Material, 0,1150 bis 0,2000 Masseteile beträgt,
eine Viskosität der polymerisierbaren Zusammensetzung für ein optisches Material 10 mPa·s bis 1.000 mPa·s, gemessen mit einem Viskosimeter vom B-Typ bei 20°C und 60 U/min, beträgt und
mindestens eines der zwei oder mehr verschiedenen Monomere für ein optisches Material eine Episulfidverbindung ist,
wobei die zwei oder mehr verschiedenen Monomere für ein optisches Material mindestens eine, ausgewählt aus der Gruppe, bestehend aus Polythiolverbindungen, Polyolverbindungen, Isocyanatverbindungen und Aminverbindungen, umfassen.

2. Polymerisierbare Zusammensetzung für ein optisches Material gemäß Anspruch 1, die ein Thixotropieverhältnis von 1,3 oder weniger aufweist.

3. Polymerisierbare Zusammensetzung für ein optisches Material gemäß Anspruch 1 oder 2, umfassend:
die zwei oder mehr verschiedenen Monomere für ein optisches Material, den Polymerisationskatalysator und
ein Präpolymer, das ein Polymer von den zwei oder mehr verschiedenen Monomeren für ein optisches Material ist und eine polymerisierbare funktionelle Gruppe aufweist,
wobei mindestens eines der zwei oder mehr verschiedenen Monomere für ein optisches Material eine Episulfidverbindung ist.

4. Polymerisierbare Zusammensetzung für ein optisches Material gemäß einem der Ansprüche 1 bis 3, wobei der Polymerisationskatalysator mindestens einen, ausgewählt aus der Gruppe, bestehend aus basischen Katalysatoren mit einem pKa-Wert von 5 bis 12 und organometallischen Katalysatoren, umfasst.

5. Gehärtetes Produkt der polymerisierbare Zusammensetzung für ein optisches Material gemäß einem der Ansprüche 1 bis 4.

6. Gehärtetes Produkt gemäß Anspruch 5, wobei keine Schlieren mit einer Länge von 1,0 mm oder mehr innerhalb eines Radius von 15 mm von der Mitte des gehärteten Produkts vorhanden sind.

7. Gehärtes Produkt gemäß einem der Ansprüche 5 oder 6, wobei der Amingehalt 0,01 Masse-% bis 0,20 Masse-%, gemessen durch Gaschromatographie-Massenspektrometrie, beträgt.

8. Verfahren zur Herstellung eines optischen Materials, umfassend:
einen Herstellungsschritt zum Herstellen einer polymerisierbaren Zusammensetzung für ein optisches Material, das zwei oder mehr verschiedene Monomere für ein optisches Material und einen Polymerisationskatalysator umfasst, wobei eines der zwei oder mehr verschiedenen Monomere für ein optisches Material eine Episulfidverbindung ist und ein Gehalt des Polymerisationskatalysators, bezogen auf eine Gesamtmenge der zwei oder mehr verschiedenen Monomere für ein optisches Material, 0,1150 bis 0,2000 Masseteile beträgt, wobei die zwei oder mehr verschiedenen Monomere für ein optisches Material mindestens eine, ausgewählt aus der Gruppe, bestehend aus Polythiolverbindungen, Polyolverbindungen, Isocyanatverbindungen und Aminverbindungen, umfassen,
einem Gießschritt zum Einstellen einer Viskosität der polymerisierbaren Zusammensetzung für ein optisches Material auf 10 mPa·s bis 1.000 mPa·s, gemessen mit einem Viskosimeter vom B-Typ bei 20°C und 60 U/min, und Gießen der polymerisierbaren Zusammensetzung für ein optisches Material in eine Form und
einen Härtungsschritt zum Polymerisieren der zwei oder mehr verschiedenen Monomere für ein optisches Material in der polymerisierbaren Zusammensetzung für ein optisches Material in der Form, um die polymerisierbare Zusammensetzung für ein optisches Material zu härten.

9. Verfahren zur Herstellung eines optischen Materials, umfassend:
einen Herstellungsschritt zum Herstellen von zwei oder mehr verschiedenen Monomeren für ein optisches Material und eines Polymerisationskatalysators mit einem Gehalt von 0,1150 bis 0,2000 Masseteile, bezogen auf eine Gesamtmenge der zwei oder mehr verschiedenen Monomere für ein optisches Material, und
einen Präpolymerisationsschritt zum Mischen von mindestens einem Teil der zwei oder mehr verschiedenen Monomere für ein optisches Material und mindestens einem Teil des Polymerisationskatalysators und Polymerisieren von mindestens einem Teil der zwei oder mehr verschiedenen Monomere für ein optisches Material, um ein Präpolymer zu erhalten, wodurch eine Mischung erhalten wird, die das Präpolymer enthält,
wobei mindestens eines der zwei oder mehr verschiedenen Monomere für ein optisches Material eine Episulfidverbindung ist,
wobei die zwei oder mehr verschiedenen Monomere für ein optisches Material mindestens eine, ausgewählt aus der Gruppe, bestehend aus Polythiolverbindungen, Polyolverbindungen, Isocyanatverbindungen und Aminverbindungen, umfassen.

10. Verfahren zur Herstellung eines optisches Materials gemäß Anspruch 9, ferner umfassend:
einen Schritt zum Herstellen einer polymerisierbaren Verbindung für ein optisches Material, wobei die Mischung, die das Präpolymer enthält, mit einem Rest des Polymerisationskatalysators oder einer Mischflüssigkeit aus einem Rest der zwei oder mehr verschiedenen Monomere für ein optisches Material und dem Rest des Polymerisationskatalysators gemischt wird, um eine polymerisierbare Zusammensetzung für ein optisches Material zu erhalten, die die zwei oder mehr verschiedenen Monomere für ein optisches Material, das Präpolymer und den Polymerisationskatalysator umfasst, und
einen Härtungsschritt zum Härten der zwei oder mehr verschiedenen Monomere für ein optisches Material in der polymerisierbaren Zusammensetzung für ein optisches Material, um ein optisches Material zu erhalten, das ein gehärtetes Produkt der polymerisierbaren Zusammensetzung für ein optisches Material ist.

11. Verfahren zur Herstellung eines optischen Materials gemäß einem der Ansprüche 8 bis 10, wobei der Polymerisationskatalysator mindestens einen, ausgewählt aus der Gruppe, bestehend aus basischen Katalysatoren mit einem pKa-Wert von 5 bis 12 und organometallischen Katalysatoren, umfasst.

12. Verfahren zur Herstellung eines optischen Materials gemäß einem der Ansprüche 8 bis 11, wobei der Polymerisationskatalysator mindestens einen, ausgewählt aus der Gruppe, bestehend aus Katalysatoren auf Aminbasis und Katalysatoren auf Organozinnbasis, umfasst.

## Revendications

1. Composition polymérisable pour un matériau optique, comprenant :
deux ou plus monomères différents pour un matériau optique, et un catalyseur de polymérisation, dans laquelle :
une teneur en catalyseur de polymérisation par rapport à une quantité totale des monomères pour un matériau optique est de 0,1150 à 0,2000 partie en masse,
une viscosité de la composition polymérisable pour un matériau optique est de 10 mPa·s à 1000 mPa·s, telle que mesurée avec un viscosimètre de type B à 20 °C et 60 tr/min, et
au moins l'un des deux ou plus monomères différents pour un matériau optique est un composé épisulfure,
dans laquelle les deux ou plus monomères différents pour un matériau optique comprennent au moins un sélectionné dans le groupe consistant en des composés polythiol, des composés polyol, des composés isocyanate et des composés amine.

2. Composition polymérisable pour un matériau optique selon la revendication 1, qui présente un rapport thixotropique inférieur ou égal à 1,3.

3. Composition polymérisable pour un matériau optique selon la revendication 1 ou la revendication 2, comprenant :
les deux ou plus monomères différents pour un matériau optique, le catalyseur de polymérisation et
un prépolymère qui est un polymère des deux ou plus monomères différents pour un matériau optique et présente un groupe fonctionnel polymérisable,
dans laquelle au moins l'un des deux ou plus monomères différents pour un matériau optique est un composé épisulfure.

4. Composition polymérisable pour un matériau optique selon l'une quelconque des revendications 1 à 3, dans laquelle le catalyseur de polymérisation comprend au moins un sélectionné dans le groupe consistant en des catalyseurs basiques présentant une valeur pKa de 5 à 12, et des catalyseurs organométalliques.

5. Produit durci de la composition polymérisable pour un matériau optique selon l'une quelconque des revendications 1 à 4.

6. Produit durci selon la revendication 5, dans lequel il n'y a aucune strie d'une longueur supérieure ou égale à 1,0 mm dans un rayon de 15 mm à partir du centre du produit durci.

7. Produit durci selon l'une quelconque de la revendication 5 ou de la revendication 6, dans lequel la teneur en amine est de 0,01 % en masse à 0,20 % en masse, telle que mesurée par chromatographie en phase gazeuse couplée à la spectrométrie de masse.

8. Procédé de production d'un matériau optique comprenant :
une étape de préparation visant à préparer une composition polymérisable pour un matériau optique, qui comprend deux ou plus monomères différents pour un matériau optique, et un catalyseur de polymérisation, au moins l'un des deux ou plus monomères différents pour un matériau optique étant un composé épisulfure, et une teneur en catalyseur de polymérisation par rapport à une quantité totale des deux ou plus monomères différents pour un matériau optique étant de 0,1150 à 0,2000 partie en masse, dans lequel les deux ou plus monomères différents pour un matériau optique comprennent au moins un sélectionné dans le groupe consistant en des composés polythiol, des composés polyol, des composés isocyanate et des composés amine ;
une étape de coulée visant à ajuster une viscosité de la composition polymérisable pour un matériau optique de 10 mPa·s à 1000 mPa·s, telle que mesurée avec un viscosimètre de type B à 20 °C et 60 tr/min, et à couler la composition polymérisable pour un matériau optique dans un moule ; et
une étape de durcissement visant à polymériser les deux ou plus monomères différents pour un matériau optique dans la composition polymérisable pour un matériau optique dans le moule, pour durcir la composition polymérisable pour un matériau optique.

9. Procédé de production d'un matériau optique comprenant :
une étape de préparation visant à préparer deux ou plus monomères différents pour un matériau optique, et un catalyseur de polymérisation présentant une teneur de 0,1150 à 0,2000 partie en masse par rapport à une quantité totale des deux ou plus monomères différents pour un matériau optique ; et
une étape de prépolymérisation visant à mélanger au moins une partie des deux ou plus monomères différents pour un matériau optique et au moins une partie du catalyseur de polymérisation, et à polymériser au moins une partie des deux ou plus monomères différents pour un matériau optique pour obtenir un prépolymère, ce qui permet d'obtenir un mélange contenant le prépolymère,
dans lequel au moins l'un des deux ou plus monomères différents pour un matériau optique est un composé épisulfure,
dans lequel les deux ou plus monomères différents pour un matériau optique comprennent au moins un sélectionné dans le groupe consistant en des composés polythiol, des composés polyol, des composés isocyanate et des composés amine.

10. Procédé de production d'un matériau optique selon la revendication 9, comprenant en outre :
une étape de production d'une composition polymérisable pour un matériau optique, dans lequel le mélange contenant le prépolymère est mélangé avec une quantité restante du catalyseur de polymérisation ou un liquide mixte d'une quantité restante des deux ou plus monomères différents pour un matériau optique et de la quantité restante du catalyseur de polymérisation pour obtenir une composition polymérisable pour un matériau optique, qui comprend les deux ou plus monomères différents pour un matériau optique, le prépolymère et le catalyseur de polymérisation ; et
une étape de durcissement visant à durcir les deux ou plus monomères différents pour un matériau optique dans la composition polymérisable pour un matériau optique pour obtenir un matériau optique, qui est un produit durci de la composition polymérisable pour un matériau optique.

11. Procédé de production d'un matériau optique selon l'une quelconque des revendications 8 à 10, dans lequel le catalyseur de polymérisation comprend au moins un sélectionné dans le groupe consistant en des catalyseurs basiques présentant une valeur pKa de 5 à 12, et des catalyseurs organométalliques.

12. Procédé de production d'un matériau optique selon l'une quelconque des revendications 8 à 11, dans lequel le catalyseur de polymérisation comprend au moins un sélectionné dans le groupe consistant en des catalyseurs à base d'amine et des catalyseurs à base d'organo-étain.
